# EUROPÄISCHE PATENTSCHRIFT

(11) **EP 1 697 071 B1**
(45) Veröffentlichungstag und Bekanntmachung des Hinweises auf die Patenterteilung: **21.07.2010**
(21) Anmeldenummer: 05747415.7
(22) Anmeldetag: 02.06.2005
(51) Int. Cl.: B22D 41/32, C04B 35/48, C04B 35/01

(54) **GEBRANNTES FEUERFESTES FORMTEIL**
FIRED REFRACTORY SHAPED PART
PIECE MOULEE REFRACTAIRE CALCINEE

(30) Priorität: 17.06.2004 DE 102004029389
(43) Veröffentlichungstag der Anmeldung: 06.09.2006
(73) Patentinhaber: Refractory Intellectual Property GmbH & Co. KG, 1100 Wien (AT)
(72) Erfinder: MÜLLER, Mira, A-8793 Edling/Gai (AT); WIESEL, Martin, A-8793 Trofaiach (AT)
(74) Vertreter: Becker, Thomas
(86) Internationale Anmeldenummer: PCT/EP2005/005916
(87) Internationale Veröffentlichungsnummer: WO 2005/123303

(56) Entgegenhaltungen:
- EP-A- 0 293 600
- US-A- 5 151 201
- US-A- 5 363 995

## Beschreibung

Die Erfindung betrifft ein gebranntes feuerfestes Formteil.

Feuerfeste Formteile werden als Steine oder in Sonderformarten, beispielsweise als Rohre, Ausgüsse, Düsen, Platten, insbesondere zur Ausrüstung von metallurgischen Schmelzgefäßen eingesetzt.

Das Schwergewicht der Erfindung liegt im Bereich der sogenannten Funktionalprodukte, also der genannten Sonderformate.

Zum Beispiel bei Schieberverschlusssystemen für die Durchflussregelung von flüssigem Stahl sind hochwertige feuerfeste Produkte notwendig, die unter anderem folgende Eigenschaften aufweisen müssen:
- Sie müssen gegenüber aggressiven Bestandteilen des flüssigen Stahls beziehungsweise einer zugehörigen Schlacke beständig sein,
- sie sollen eine gute Temperaturwechselbeständigkeit aufweisen, um eine Rissbildung z. B. beim ersten Kontakt mit heißem Stahl zu vermeiden,
- die Platten müssen gute Gleiteigenschaften aufweisen, weil sie relativ zueinander bewegt werden. Dabei muss gleichzeitig eine hundertprozentige Dichtigkeit entlang der Plattenebene (mit Ausnahme des Auslaufbereiches) gewährleistet sein.

Für sogenannte Freilaufdüsen oder andere Funktionalprodukte gelten zumindest die Anforderungen an Thermoschockbeständigkeit und Heißfestigkeit analog.

Der Stand der Technik greift bei diesem Anforderungsprofil auf Werkstoffe auf Basis Zirkonoxid zurück, also Werkstoffe auf Basis ZrO₂. Die Herstellung der Produkte erfolgt mit feinkeramischen Produktionsmethoden, um zum Beispiel eine hohe Dichte zu erreichten. Die Rohstoffe, beispielsweise Baddeleyit, werden in einer Kornfraktion < 0,5 mm eingesetzt und auf Fraktionen d₅₀ um 5 µm und weniger gemahlen. Nach Granulation des Materials und Zugabe eines Bindemittels erfolgt die Formgebung durch Pressen bei Drücken von beispielsweise 120-160 MPa. Nach dem folgenden Brand, beispielsweise bei Temperaturen zwischen 1600 und 1700 °C in oxidierender Atmosphäre, lässt sich eine Rohdichte von ca 4,7 g/cm³ und ein offenes Porenvolumen von etwa 15 % erreichen. Die Brennschwindung liegt bei etwa 10 %.

Durch ein- oder mehrmaliges Tränken mit Teer wird das Produkt anschließend veredelt, wobei die offene Porosität auf rund 4-5 Vol.-% sinkt. Nach der anschließenden Temperung bei ca. 500 °C entweichen flüchtige Bestandteile des Teers. Der Rest-Kohlenstoffgehalt liegt bei ca. 1-2 Gew.-%, bezogen auf das Formteil insgesamt.

Produkte dieser Art haben sich im Wesentlichen bewährt. Nachteilig ist ihre hohe Brennschwindung. Die hohe Dichte und der Umstand, dass ein Großteil der offenen Porosität aus Mikroporen (d₅₀<3µm) besteht, verhindern zum einen eine weitere, intensivere Teertränkung und sind auch Ursache für eine unzureichende Thermoschockbeständigkeit.

Die US 5,363,995 offenbart Schiebeplatten auf Basis Al203 und Gre, die während der Herstellung mehrfach mit Teer getränkt werden. Im Ergebnis hat das Produkt eine offene Porosität von ca. 13,5 % und einen Rest-Kohlenstoffgehalt aus dem Tränkungsmittel von ca. 3,5 %.

Entsprechend liegt der Erfindung die Aufgabe zugrunde, ein gebranntes feuerfestes Formteil, insbesondere zur Herstellung von Funktionalprodukten der genannten Art, anzubieten, bei dem sich die genannten Eigenschaften vorteilhaft ergänzen.

In systematischen Versuchen wurden verschiedene Parameter, wie Kornaufbau, Porosität, Tränkungsverhalten etc. näher untersucht. Dabei wurde festgestellt, dass unter anderem die erhebliche Brennschwindung bei Produkten gemäß Stand der Technik nachteilig ist. Diese kann deutlich reduziert werden, wenn als Grundstoff zur Herstellung ein bereits einmal gebranntes Material eingesetzt wird, nachstehend als Sekundärmaterial bezeichnet. Dieses Sekundärmaterial kann das Material sein, welches vorstehend als Stand der Technik beschrieben wurde. Erfindungsgemäß wird es als Sekundärmaterial zu einer Körnung gebrochen, mit einem Bindemittel, beispielsweise Stärke, konfektioniert, zu dem gewünschten Formteil gepresst und anschließend gebrannt. Durch die Verwendung des gebrannten Sekundärrohstoffes sinkt die Brennschwindung drastisch. Gleichzeitig erhöht sich die Porosität nach dem Brand, weil zwischen den Körnern des Sekundärrohstoffes zusätzliches Porenvolumen entsteht. Diese Poren sind deutlich größer als die Poren innerhalb des einzelnen Korns (des Sekundärgrundstoffs), so dass auch eine anschließende Teertränkung erleichtert wird und deutlich mehr Kohlenstoff in das Formteil infiltriert werden kann.

In ihrer allgemeinsten Ausführungsform betrifft die Erfindung danach ein gebranntes feuerfestes Formteil mit den Merkmalen von Anspruch 1.

Der Anteil des refraktären Sekundärmaterials liegt nach Ausführungsformen über 80, 85, 90 oder aber auch über 95 Gew.-%, wobei die Körnung auch < 2 mm oder < 1 mm gewählt werden kann. Nach einer Ausführungsform wird eine Körnung d₅₀ zwischen 0,4 und 0,6 mm eingesetzt. Entsprechend liegt der Anteil sonstiger Versatzkomponenten (hierzu gehört nicht das C-haltige Füllmaterial) bei < 5, < 10, < 15, < 20 oder < 25 Gew.-%, beispielsweise mit Mindestanteilen von 3, 5, 8, 10, 15 oder 20 Gew.-%.

Während das einzelne Korn (entsprechend dem Stand der Technik) eine Porosität von beispielsweise 10 oder 15 Vol.-% aufweist, ergibt sich durch den zweiten Brand ein deutlich höheres offenes Porenvolumen durch Zwickel (Freiräume) zwischen den einzelnen Körnern des Sekundärmaterials. Beispielsweise weisen mindestens 50 % der Poren einen Durchmesser > 6 µm auf, während im Stand der Technik der überwiegende Teil der Poren einen Durchmesser < 3 µm besitzt. Erfindungsgemäß können die Poren auch Durchmesser von 10 µm und mehr aufweisen.

Nach einer Ausführungsform beträgt die Untergrenze für das offene Porenvolumen (nach dem Brand, aber vor dem Tränken) statt 10 % : 15 % oder 20 %.

Das Formteil kann einfach oder mehrfach mit einem kohlenstoffhaltigen Material, beispielsweise Teer, Pech oder dergleichen getränkt werden. Aufgrund des größeren Porenvolumens und der Poren mit größerem Durchmesser lässt sich der Rest-Kohlenstoffgehalt des getränkten und anschließend getemperten Bauteils auf Werte > 5 Gew.-% einstellen.

Das vorgebrannte refraktäre Sekundärmaterial besteht nach einer Ausführungsform zu mindestens 90 Gew.-% aus ZrO₂. Dabei kann es sich um reines Zirkoniumdioxid handeln oder Zirkonoxid, welches beispielsweise durch MgO und/oder CaO stabilisiert oder teilstabilisiert wurde. Geeignete Ausgangsrohstoffe finden sich bei Schulle "Feuerfeste Werkstoffe", 1. Aufl. 1990, 221-223 (ISBN 3-342-00306-5). Ein geeignetes Sekundärmaterial ist auch ein Recyclingmaterial. Dies kann Produktionsabfall oder gebrauchtes Material sein. Ebenso kann aufgeschmolzenes, erstarrtes und dann gebrochenes Material als Sekundärmaterial eingesetzt werden.

Nach dem Tränken des Formteils mit dem kohlenstoffhaltigen Material und der anschließenden Temperung des Formteils beträgt die verbleibende Porosität zwischen 4,5 und 7,5 Vol.-%.

Neben den erfindungsgemäß vorgesehenen mindestens 75 Gew.-% Sekundärrohstoff können analog bis zu 25 Gew.-% anderer refraktärer Komponenten dem Versatz zugegeben werden, beispielsweise Primärmaterialien analoger mineralogischer beziehungsweise chemischer Zusammensetzung, also beispielsweise Baddeleyit. Vorzugsweise wird dieses Primärmaterial im Feinkornbereich eingesetzt. Es dient damit gleichzeitig der partiellen Verfüllung der Zwickel zwischen den gröberen Körnern des Sekundärrohstoffes.

Die Erfindung wird nachstehend anhand zweier Ausführungsbeispiele näher erläutert:

### 1. Beispiel:

85 Gew.-% vorgebranntes und < 1 mm gekörntes ZrO₂ werden mit 15 Gew.-% Baddeleyit (nicht vorgebrannt) der Korngröße < 1 mm mit Stärke (als Bindemittel) gemischt und anschließend bei 130 MPa zu einem Formkörper gepresst.

Nach einer Trocknung wird der Formkörper bei 1640 °C in oxidierender Atmosphäre gebrannt. Er weist anschließend eine Rohdichte von ca. 4,2 g/cm³ und eine Porosität von 25 Vol.-% auf. Die Brennschwindung beträgt 1,5 Gew.-%.

Nach dem Brand wird das Formteil mit Teer getränkt und bei 500 °C getempert. Diese Teertränkung und anschließende Temperung wird danach noch einmal ausgeführt. Der Rest-Kohlenstoffgehalt wird zu 5,5 Gew.-% bezogen auf das Formteil, ermittelt.

Die Kalt- und Heißbiegefestigkeit des Formteils ist zwar geringer als bei dem Eingangs erwähnten Produkt gemäß Stand der Technik (welches ausschließlich aus Primärrohstoffen hergestellt wurde); die drastisch verringerte Brennschwindung (nur noch ca. 1,0 %) sowie die deutlich verbesserte Infiltrationsbeständigkeit und eine gute Thermoschockbeständigkeit sind für die genannten Anwendungen als Schieberplatten bzw. als Freilaufdüse allerdings von erheblich größerer Bedeutung.

### 2. Beispiel:

Baddeleyit wird aufgeschmolzen und anschließend abgekühlt. Der so gebildete "Schmelzblock" wird danach auf eine Körnung 0,2-3 mm gebrochen. Das gekörnte Sekundärmaterial ersetzt das Sekundärmaterial gemäß Beispiel 1 zur Hälfte. Die Prüfwerte sind analog.

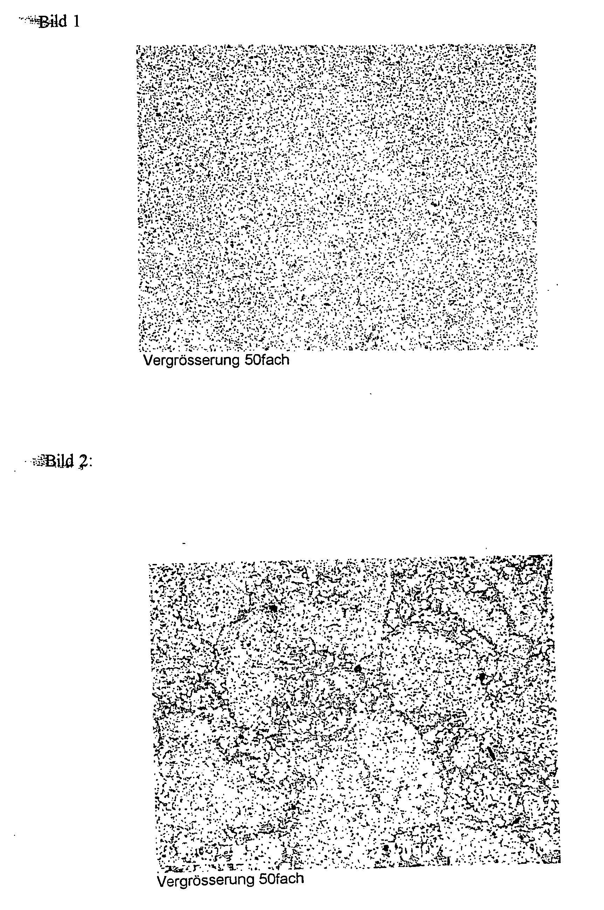

Die Unterschiede zwischen dem Stand der Technik und der Erfindung ergeben sich auch aus den beiliegenden Schliffbildern. Bild 1 zeigt ein weitestgehend homogenes Gefüge mit extrem feiner und feinverteilter Porosität. Bild 2 betrifft das erfindungsgemäße Produkt. Deutlich sind die groben Körner des Sekundärrohstoffes und die im Grenzkornbereich gröberen Poren, verfüllt mit dem kohlenstoffhaltigen Material, zu erkennen.

Die Unterschiede zwischen dem Stand der Technik und der Erfindung lassen sich auch über die jeweilige Porengrößenverteilung darstellen (hier bestimmt nach der Methode der Quecksilberdruckporosimetrie).

Während der Sekundärrohstoff als solcher mehr oder weniger ausschließlich Poren mit einem Durchmesser < 3 µm aufweist (in jedem Fall weisen mehr als 50 % der Poren einen Durchmesser < 3 µm auf) verschiebt sich die Porengrößenverteilung bei einem erfindungsgemäßen, zweimal gebrannten Produkt auf deutlich höhere Porendurchmesser, insbesondere Werte > 10 µm.

Trägt man den Porendurchmesser (logarithmisch) gegenüber der Porenverteilung beziehungsweise der relativen offenen Porosität (jeweils in %) auf so ergibt sich für einen erfindungsgemäßes Produkt eine Porenverteilung mit einem ersten Maximum im Bereich um etwa 3 µm und ein zweites Maximum im Bereich um circa 10 µm. Dabei resultiert das zweite Maximum aus der weiteren Aufbereitung des gebrannten Sekundärrohstoffs und dem zweiten Brennvorgang.

Allgemein ergibt sich ein erstes Maximum für Porendurchmesser unter 5 µm und das zweite Maximum für Porendurchmesser über 8 µm.

Sofern in dieser Anmeldung Eigenschaftswerte oder Messdaten angegeben wurden, erfolgte dies jeweils unter Bezug auf die folgenden Normen bzw. Standards:

| | |
|---|---|
| Rohdichte und Porosität | DIN EN 993-1 |
| Biegefestigkeit: | DIN EN 993-6,7 |
| Korngrößenverteilung (gröber ca. 100 µm): | DIN ISO 3310 |
| Korngrößenverteilung (feiner 100 µm): | DIN ISO 13320 |
| | |
| Wärmedehnung (Brennschwindung): | DIN 51045 |
| Rest-Kohlenstoffgehalt: | ASTM C 831-93 |
| Porengrößenverteilung | DIN 66133 |

## Patentansprüche

1. Gebranntes feuerfestes Formteil, dessen Gefüge
a) zu mindestens 75 Gew.-% aus einem vorgebrannten, refraktären Sekundärmaterial einer Körnung bis 3 mm besteht und
b) ein offenes Porenvolumen zwischen 10 und 30% aufweist, das nach dem Brand zumindest teilweise mit einem kohlenstoffhaltigen Material derart gefüllt wurde, wobei dass nach anschließender Temperung
c) der Rest-Kohlenstoffgehalt gemäß ASTM C831-93, bezogen auf das Formteil, > 5 Gew.-% und
d) die offene Porosität zwischen 4,5 und 7,5 Vol.-% beträgt.

2. Formteil nach Anspruch 1, dessen Sekundärmaterial in einer Kornfraktion d₅₀ < 1 mm vorliegt.

3. Formteil nach Anspruch 1, mit einem offenen Porenvolumen, vor dem Verfüllen mit einem kohlenstoffhaltigen Material, zwischen 20 und 30%.

4. Formteil nach Anspruch 1, dessen Kohlenstoffgehalt > 5 Gew.-% beträgt.

5. Formteil nach Anspruch 1, dessen Sekundärmaterial zu mindestens 90 Gew.-% aus ZrO₂ besteht.

6. Formteil nach Anspruch 1, dessen Sekundärmaterial aus stabilisiertem, teilstabilisiertem, pseudostabilisiertem ZrO₂ oder Mischungen daraus besteht.

7. Formteil nach Anspruch 1, dessen Gefüge 5-25 Gew.-% eines refraktären Primärmaterials enthält.

8. Formteil nach Anspruch 7, dessen Primärmaterial mineralogisch, chemisch oder mineralogisch und chemisch dem Sekundärmaterial entspricht.

9. Formteil nach Anspruch 7 oder 8, dessen Primärmaterial in einer Kornfraktion < 0,3 mm vorliegt.

10. Formteil nach Anspruch 1, dessen Sekundärmaterial ein Recyclingmaterial ist.

11. Formteil nach Anspruch 1, dessen Porenverteilung so ist, dass sich bei Auftragen von Porendurchmesser (logarithmisch) gegenüber relativer offener Porosität oder Porenverteilung mindestens zwei Maxima ergeben.

12. Formteil nach Anspruch 11, wobei ein erstes Maximum unter 5 µm und ein zweites Maximum über 8 µm liegt.

## Claims

1. A fired refractory shaped part, the structure of which
a) comprises at least 75 wt.% of a pre-fired refractory secondary material with a grain size up to 3 mm and
b) has a pore volume between 10 and 30% that, after firing of the shaped part, was at least partially filled with a carbon containing material such, that after subsequent tempering
c) the carbon content, in accordance with ASTM C831-93, referred to the shaped part, amounts to > 5 wt.% and
d) the open porosity being between 4.5 and 7.5 % by volume.

2. The shaped part according to Claim 1, the secondary material of which is present in a grain size fraction d₅₀ of < 1 mm.

3. The shaped part according to Claim 1 with an open pore volume between 20 and 30% before the filling with a material containing carbon.

4. The shaped part according to Claim 1, the carbon content of which amounts to > 5 wt.%.

5. The shaped part according to Claim 1, the secondary material of which comprises at least 90 wt.% ZrO₂.

6. The shaped part according to Claim 1, the secondary material of which comprises of stabilized, partially stabilized, pseudo-stabilized ZrO₂ or mixtures thereof.

7. The shaped part according to Claim 1, the structure of which comprises 5-25 wt.% of a refractory primary material.

8. The shaped part according to Claim 7, the primary material of which corresponds to the secondary material mineralogically, chemically or mineralogically and chemically.

9. The shaped part according to Claim 7 or 8, the primary material of which is present in a grain size fraction of < 0.3 mm.

10. The shaped part according to Claim 1, the secondary material of which is a recycled material.

11. The shaped part according to Claim 1, the pore distribution of which is such that at least two maximums result if pore diameters are plotted (logarithmically) as a function of relative open porosity or pore distribution.

12. The shaped part according to Claim 11, wherein a first maximum lies below 5 µm and a second maximum lies above 8 µm.

## Revendications

1. Pièce réfractaire moulée cuite dont la structure
a) consiste pour au moins 75 % en poids dans une matière secondaire réfractaire précuite d'une granulation de jusqu'à 3 mm et
b) présente un volume poreux ouvert compris entre 10 et 30 %, qui après la cuisson a été rempli au moins partiellement d'une matière carbonée, de sorte qu'après un étuvage consécutif après cuisson,
c) la teneur résiduelle en carbone selon ASTM C831-93 par rapport à la pièce moulée soit > 5 % en poids et
d) la porosité ouverte soit comprise entre 4,5 et 7,5 % en volume.

2. Pièce moulée selon la revendication 1, dont la matière secondaire se présente dans une fraction granulométrique d₅₀ < 1 mm.

3. Pièce moulée selon la revendication 1, avec un volume poreux ouvert compris entre 20 et 30 % avant le remplissage avec une matière carbonée.

4. Pièce moulée selon la revendication 1, dont la teneur en carbone est > 5 % en poids.

5. Pièce moulée selon la revendication 1, dont la matière secondaire consiste au moins pour 90 % en poids dans du ZrO₂.

6. Pièce moulée selon la revendication 1, dont la matière secondaire consiste dans un ZrO₂ stabilisé, partiellement stabilisé, pseudo-stabilisé ou dans des mélanges de ces derniers.

7. Pièce moulée selon la revendication 1, dont la structure contient de 5 à 25 % en poids d'une matière primaire réfractaire.

8. Pièce moulée selon la revendication 7, dont la matière primaire correspond du point de vue minéralogique, chimique ou minéralogique et chimique à la matière secondaire.

9. Pièce moulée selon les revendications 7 ou 8, dont la matière primaire se présente dans une fraction granulométrique < 0,3 mm.

10. Pièce moulée selon la revendication 1, dont la matière primaire est une matière recyclée.

11. Pièce moulée selon la revendication 1, dont la distribution poreuse est telle que si on rapporte le diamètre des pores (de façon logarithmique) à la porosité ouverte ou à la distribution poreuse, il en résulte au moins deux valeurs maximales.

12. Pièce moulée selon la revendication 11, une première valeur maximale étant inférieure à 5 µm et une deuxième valeur maximale étant supérieure à 8 µm.
